# EUROPEAN PATENT APPLICATION

(11) **EP 2 806 281 A1**
(43) Date of publication of application: **26.11.2014**
(21) Application number: 13174072.2
(22) Date of filing: 27.06.2013
(51) Int. Cl.: G01R 31/26

(54) **Device and method for detecting the ability of an anti-PID-effect of a solar cell**

(30) Priority: 20.05.2013 CN 201310187374
(71) Applicant: Jinkosolar Holding Co., Ltd., 334100 Jiangxi (CN)
(72) Inventor: Jiang, Fangdan, 334100 Jiangxi (CN); Huang, Jide, 334100 Jiangxi (CN); Guo, Changchun, 334100 Jiangxi (CN); Jin, Hao, 334100 Jiangxi (CN); Chen, Kangping, 334100 Jiangxi (CN)
(74) Representative: Epping - Hermann - Fischer

(57) **Abstract**

A device and a method for detecting the ability of anti PID effect of a solar cell are disclosed according to embodiments of the invention. The device includes a static generator including a high voltage power supply and an ion stick connected to the high voltage power supply; and a metal tray under the ion stick. It is judged whether the solar cell has the ability of anti PID effect by detecting the solar cell directly by the device, so for determining whether the solar cell has the ability of anti PID effect, there is no need for a solar cell assembly manufactured by the solar cell. Therefore, there is no influence of the manufacturing process and the packaging material of the solar cell assembly on the testing result of the PID effect, the accuracy of the detecting result of the PID effect of the solar cell is improved, the time and the cost are saved, and the process optimization of the solar cell is improved.

## Description

### FIELD OF THE INVENTION

The invention relates to the technical field of solar cell manufacturing, and in particular to a device and a method for detecting ability of anti PID effect of a solar cell.

### BACKGROUND OF THE INVENTION

Solar energy is a kind of clear energy, and a solar cell assembly is a device for converting light energy into electrical energy by using photovoltaic effect of the P-N junction of silicon material. The solar cell assembly includes: a glass backboard and a glass substrate which are arranged oppositely; a solar cell arranged between the glass backboard and the glass substrate; a packaging frame for fixing the glass backboard, the solar cell and the glass substrate; and so on.

Potential Induced Degradation (PID) effect is an effect that leakage current occurs between the glass and the packaging material of the solar cell assembly since the solar cell assembly operates under a high negative voltage for a long time, a large number of charges are accumulated on the surface of the solar cell, leading to a degraded passivation effect of the surface of the solar cell; moreover, the charges accumulated on the surface of the solar cell may draw photogenic charge carriers and generate leakage current, leading to degraded electrical performance parameters of the solar cell assembly, such as degraded fill factor, degraded short circuit current and degraded open circuit voltage, thus the electrical performance of the photovoltaic assembly is lower than the design criteria. In a case of a serious PID effect, the power of the solar cell assembly will be reduced by more than 90%.

The test for the PID effect in the prior art is performed on the solar cell assembly, including: short-circuiting the positive and negative terminals of the solar cell assembly under certain temperature and relative humidity; then applying an external voltage so that the solar cell is under certain negative voltage in relative to the aluminium frame, and maintaining for a specific time period; then testing the output power of the solar cell assembly, and calculating attenuation degree of the output power of the solar cell assembly before and after the PID test; and then judging whether the solar cell assembly has the ability of anti PID effect according to the attenuation degree of the output power of the solar cell assembly before and after the PID test. According to the IEC standard, the test conditions of the PID in the prior art include: a temperature of 85 degree Celsius, a relative humidity of 85%, an on-load voltage of -1000 volts and a test time of 96 hours. It is considered that the solar cell assembly has the ability of anti PID effect if the attenuation ratio of the output power of the solar cell assembly before and after the PID effect test is smaller than 5%, and vice versa.

However, the method for testing the PID effect in the prior art has a poor accuracy.

### SUMMARY OF THE INVENTION

To solve the above technical problems, a device and a method for detecting ability of anti PID effect of a solar cell are provided according to embodiments of the invention, for improving the accuracy of the method for testing the PID effect of the solar cell.

To solve the above problems, the following technical solutions are provided according to the embodiments of the invention.

A device for detecting ability of anti PID effect of a solar cell includes: a static generator including a high voltage power supply and an ion stick connected to the high voltage power supply; and a metal tray under the ion stick.

Preferably, the static generator is adapted to generate a positive ion, a negative ion, or mixed ions of a positive ion and a negative ion.

Preferably, the distance between the metal tray and the ion stick ranges from 5cm to 50cm, with 5cm and 50cm being included in.

Preferably, the ion stick is adapted to generate ion radiation with a current strength ranging from 0.1mA to 10mA, with 0.1mA and 10mA being included in.

Preferably, the ion stick is adapted to generate ion radiation during a time period ranging from 1 hour to 200 hours, with 1 hour and 200 hours being included in.

A method for detecting ability of anti PID effect of a solar cell, which is applied to the device described above, includes:
placing a static generator and a metal tray in a testing environment, where the static generator includes a high voltage power supply and an ion stick connected to the high voltage power supply;
detecting photoelectric conversion efficiency of a solar cell to be detected;
placing the solar cell to be detected on the metal tray;
connecting the high voltage power supply and the solar cell to the ground respectively;
enabling the static generator to start an experiment and maintaining for a preset time period;
disabling the static generator and detecting photoelectric conversion efficiency of the solar cell to be detected; and
judging whether the solar cell to be detected has the ability of anti PID effect according to the photoelectric conversion efficiencies of the solar cell to be detected before and after the experiment.

Preferably, the enabling the static generator to start an experiment and maintaining for a preset time period includes:
enabling the static generator and supplying a high voltage of 30 kilovolt to the ion stick by the high voltage power supply;
generating an ion flow by the ion stick under the high voltage,
wherein the ion flow is conducted to the surface of the solar cell in a radiation manner, and a discharge loop is formed among the ion stick, the solar cell and the ground, and
the whole procedure is maintained for the preset time period of 24 hours.

Preferably, the judging whether the solar cell to be detected has the ability of anti PID effect according to the photoelectric conversion efficiencies of the solar cell to be detected before and after the experiment includes:
calculating an attenuation ratio of photoelectric conversion of the solar cell to be detected before and after the experiment according to the photoelectric conversion efficiencies of the solar cell to be detected before and after the experiment; and
judging whether the solar cell to be detected has the ability of anti PID effect according to the attenuation ratio of photoelectric conversion of the solar cell to be detected before and after the experiment.

Preferably, the judging whether the solar cell to be detected has the ability of anti PID effect according to the attenuation ratio of photoelectric conversion of the solar cell to be detected before and after the experiment includes:
determining that the solar cell to be detected does not have the ability of anti PID effect if the attenuation ratio of photoelectric conversion of the solar cell to be detected before and after the experiment is greater than a preset attenuation ratio; and
determining that the solar cell to be detected has the ability of anti PID effect if the attenuation ratio of photoelectric conversion of the solar cell to be detected before and after the experiment is not greater than the preset attenuation ratio.

Preferably, the testing environment includes:
an environmental temperature ranging from 0 degree Celsius to 100 degree Celsius, with 0 degree Celsius and 100 degree Celsius being included in; and
a relative humidity ranging from 0 to 100%.

As compared with the prior art, the above technical solutions have the following advantages.

In the technical solutions provided according to the embodiments of the invention, it is judged whether the solar cell has the ability of anti PID effect by detecting the solar cell directly. So for determining whether the solar cell has the ability of anti PID effect, there is no need for a solar cell assembly manufactured by the solar cell. Therefore, there is no influence of the manufacturing process and the packaging material of the solar cell assembly on the testing result of the PID effect, the accuracy of the detecting result of the PID effect of the solar cell is improved, the time and the cost are saved, and the process optimization of the solar cell is improved.

### BRIEF DESCRIPTION OF THE DRAWINGS

The accompanying drawings needed to be used in the description of the embodiments or the prior art will be described briefly as follows, so that the technical solutions according to the embodiments of the present invention or according to the prior art will become clearer. It is obvious that the accompanying drawings in the following description are only some embodiments of the present invention. For those skilled in the art, other accompanying drawings may be obtained according to these accompanying drawings without any creative work.
Figure 1 is a schematic structural diagram of a device for detecting ability of anti PID effect of a solar cell according to an embodiment of the invention; and
Figure 2 is a flowchart of a method for detecting ability of anti PID effect of a solar cell according to an embodiment of the invention.

### DETAILED DESCRIPTION OF THE INVENTION

As mentioned in the background, the method for testing the PID effect in the prior art has a poor accuracy.

The inventor has found that the test of the PID effect in the prior art is performed on the solar cell assembly, and the manufacturing process and the packaging material of the solar cell assembly will greatly affect the testing result of the PID effect of the solar cell assembly. Therefore, when the testing result of the PID effect of the solar cell assembly is that the solar cell assembly does not have the ability of anti PID effect, it is hard to determine whether the manufacturing process and the packaging material of the solar cell assembly or the solar cell cause the inability. So the testing result of the PID effect of a single solar cell assembly can not directly reflect the ability of anti PID effect of the solar cell in the solar cell assembly.

Moreover, the time period for testing the PID of the solar cell assembly in the prior art is long, so the feedback cycle of the judgment result is long, which is not benefit for process optimization of the solar cell.

In view of this, A device for detecting ability of anti PID effect of a solar cell is provided according to the invention, and the device includes:
a static generator including a high voltage power supply and an ion stick connected to the high voltage power supply; and
a metal tray under the ion stick.

Correspondingly, a method for detecting ability of anti PID effect of a solar cell using the device described above is further provided according to the invention, and the method includes:
placing a static generator and a metal tray in a testing environment, wherein the static generator includes a high voltage power supply and an ion stick connected to the high voltage power supply;
detecting photoelectric conversion efficiency of a solar cell to be detected;
placing the solar cell to be detected on the metal tray;
connecting the high voltage power supply and the solar cell to the ground respectively;
enabling the static generator to start an experiment and maintaining for a preset time period;
disabling the static generator and detecting photoelectric conversion efficiency of the solar cell to be detected; and
judging whether the solar cell to be detected has the ability of anti PID effect according to the photoelectric conversion efficiencies of the solar cell to be detected before and after the experiment.

In the device and method for detecting the ability of anti PID effect of the solar cell provided according to the embodiments of the invention, it is judged whether the solar cell has the ability of anti PID effect by detecting the solar cell directly. So for determining whether the solar cell has the ability of anti PID effect, there is no need for a solar cell assembly manufactured by the solar cell. Therefore, there is no influence of the manufacturing process and the packaging material of the solar cell assembly on the testing result of the PID effect, the accuracy of the detecting result of the PID effect of the solar cell is improved, the time and the cost are saved, and the process optimization of the solar cell is improved.

The above is the core idea of this application, and the technical solutions of the embodiments of the present invention will be described clearly and completely in conjunction with the drawings of the embodiments of the present invention hereinafter. Obviously, the described embodiments are only part but not all of embodiments of the present invention. All the other embodiments obtained by those skilled in the art without any creative work based on the embodiment in the present invention fall within the scope of protection of the present invention.

More specific details will be set forth in the following descriptions for sufficient understanding of the invention. However, the invention may also be implemented in other ways different from the way described herein, and similar extensions may be made by those skilled in the art without departing from the spirit of the invention. Therefore, the invention is not limited to the specific implementations disclosed hereinafter.

The present invention is described in detail in conjunction with schematic diagrams. In describing the embodiments of the present invention, for better explanation, the sectional view of the structure of the device will be magnified locally and will not be magnified in a general proportion, and the schematic diagrams are only examples, which should not be explained as a limitation of the scope of protection of the present invention. Furthermore, in practical manufacturing, the sizes in three-dimensional space, i.e., length, width and depth, should be included.

### First embodiment

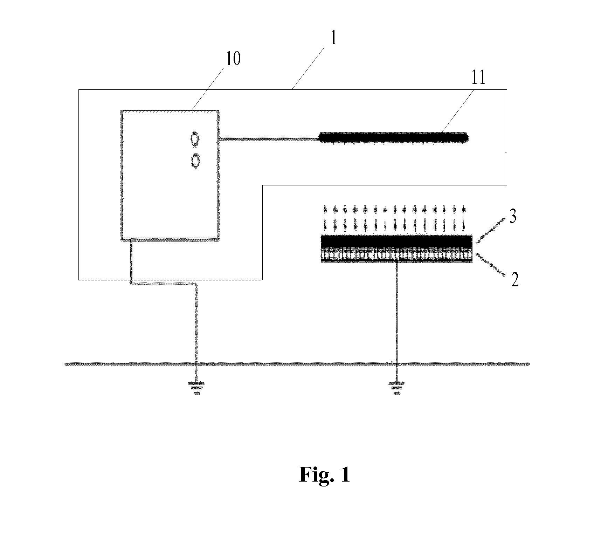

As shown in Figure 1, the device for detecting ability of anti PID effect of a solar cell provided according to an embodiment of the invention includes:
a static generator 1 including a high voltage power supply 10 and an ion stick 11 connected to the high voltage power supply 10; and
a metal tray 2 under the ion stick 11.

It is to be noted that the ion generated by the static generator 1 may be a positive ion, a negative ion, or mixed ions of a positive ion and a negative ion, which is not limited in the invention.

It is further to be noted that in a preferable embodiment of the invention, the distance between the metal tray 2 and the ion stick 11 ranges from 5cm to 50cm, with 5cm and 50cm being included in. In another preferable embodiment of the invention, the current strength of the ion radiation generated by the ion stick 11 ranges from 0.1mA to 10mA, with 0.1mA and 10mA being included in. In yet another preferable embodiment of the invention, the time period during which the ion stick 11 generates the ion radiation ranges from 1 hour to 200 hours, with 1 hour and 200 hours being included in. However, in other embodiments of the invention, the distance between the metal tray 2 and the ion stick 11, the current strength of ion radiation generated by the ion stick 11, and the time period during which the ion stick 11 generates the ion radiation may also be other values, which are depended on specific conditions and are not limited herein.

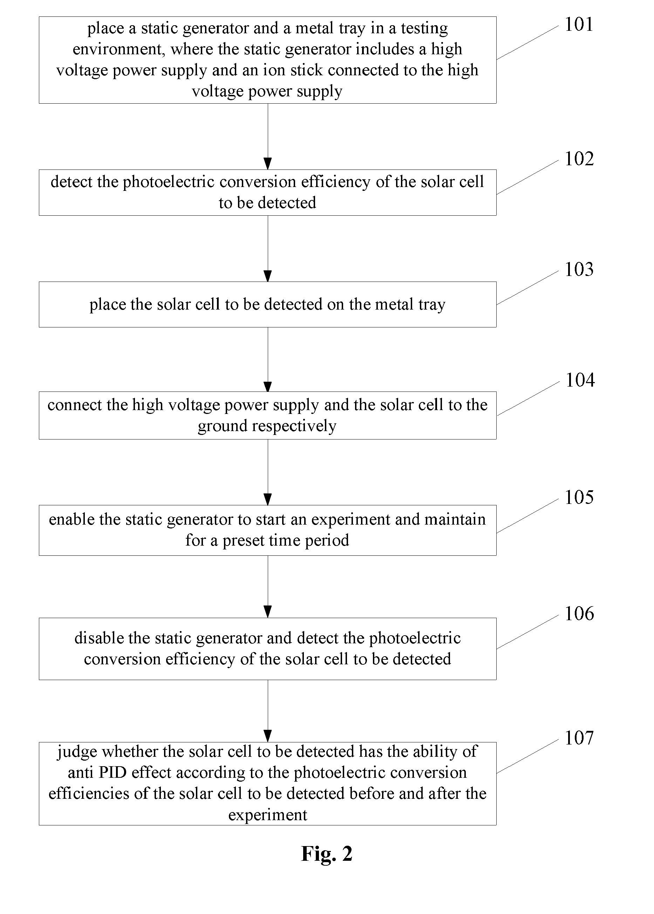

Correspondingly, a method for detecting ability of anti PID effect of a solar cell by using the device described above is further provided according to an embodiment of the invention, and as shown in Figure 2, the method includes the following steps 101 to 107.

Step 101: placing a static generator 1 and a metal tray 2 in a testing environment, where the static generator 1 includes a high voltage power supply 10 and an ion stick 11 connected to the high voltage power supply 10. Specifically, the testing environment includes: an environmental temperature ranging from 0 degree Celsius to 100 degree Celsius, with 0 degree Celsius and 100 degree Celsius being included in; and a relative humidity ranging from 0 to 100%. In a preferable embodiment of the invention, the testing environment includes an environmental temperature of 25 degree Celsius and a relative humidity of 50%. In other embodiments of the invention, the environmental temperature and the relative humidity in the testing environment may be adjusted according to specific experiment requirements and are not limited in the invention.

Step 102: detecting photoelectric conversion efficiency of the solar cell 3 to be detected. Specifically, the photoelectric conversion efficiency of the solar cell 3 to be detected is detected and recorded as a first photoelectric conversion efficiency.

Step 103: placing the solar cell 3 to be detected on the metal tray 2. The solar cell is directly below the ion stick 11 since the metal tray 2 is directly below the ion stick 11.

Step 104: connecting the high voltage power supply 10 and the solar cell to the ground respectively.

In an embodiment of the invention, the connecting the solar cell to the ground includes: short-circuiting the positive and negative terminals of the solar cell, and connecting the short-circuited common terminal of the positive and negative terminals of the solar cell to the ground. In another embodiment of the invention, the connecting the solar cell to the ground includes: placing the solar cell on a conductive metal plate, and electrically connecting the positive and negative terminals of the solar cell to the conductive metal plate. In the embodiment of the invention, the positive and negative terminals of the solar cell are electrically connected to the metal tray 2, and the metal tray 2 is connected to the ground, so that the solar cell is electrically connected to the ground. In other embodiments of the invention, the solar cell may be connected to the ground in other ways, which is not limited in the invention as long as it is ensured that the positive and negative terminals of the solar cell are connected to the ground.

Step 105: enabling the static generator 1 to start an experiment and maintaining for a preset time period.

In an embodiment of the invention, step 105 includes: enabling the static generator 1 and supplying a high voltage of 30 kilovolt to the ion stick 11 by the high voltage power supply 10; generating an ion flow by the ion stick 11 under the high voltage, where the ion flow is conducted to the surface of the solar cell in a radiation manner and a discharge loop is formed among the ion stick 11, the solar cell and the ground; the whole procedure is maintained for a preset time period which is preferably 24 hours. Specifically, in a preferable embodiment of the invention, the ion flow is a positive ion flow, and the strength of the ion flow is 0.5mA. In other embodiments of the invention, the ion flow may be a negative ion flow or a mixed ion flow of positive ions and negative ions, and the preset time period and the ion flow strength may also be other values, which are depended on specific conditions and are not limited in the invention.

Step 106: disabling the static generator 1 and detecting photoelectric conversion efficiency of the solar cell 3 to be detected.

After step 105 is maintained for a preset time period, the static generator 1 is disabled, and the photoelectric conversion efficiency of the solar cell 3 to be detected is detected and recorded as a second photoelectric conversion efficiency.

Step 107: judging whether the solar cell 3 to be detected has the ability of anti PID effect according to the photoelectric conversion efficiencies of the solar cell 3 to be detected before and after the experiment.

In an embodiment of the invention, step 107 includes the following steps 1071 and 1072.

Step 1071: calculating the attenuation ratio of the photoelectric conversion of the solar cell 3 to be detected before and after the experiment according to the photoelectric conversion efficiencies of the solar cell 3 to be detected before and after the experiment, i.e., calculating the attenuation amplitude of the photoelectric conversion efficiency of the solar cell 3 to be detected before and after the experiment according to the first photoelectric conversion efficiency measured before the experiment and the second photoelectric conversion efficiency measured after the experiment of the solar cell 3 to be detected.

Step 1072: judging whether the solar cell 3 to be detected has the ability of anti PID effect according to the attenuation ratio of the photoelectric conversion of the solar cell 3 to be detected before and after the experiment.

The attenuation amplitude of the photoelectric conversion efficiency of the solar cell 3 to be detected before and after the experiment ranges from 0 to 100%, and when the attenuation amplitude of the photoelectric conversion efficiency of the solar cell 3 to be detected before and after the experiment ranges from 5% to 100%, the ability of anti PID effect of the solar cell 3 to be detected is poor, and is degraded as the attenuation amplitude of the photoelectric conversion efficiency of the solar cell 3 to be detected before and after the experiment increases.

Therefore, step 1072 includes: determining that the solar cell 3 to be detected does not have the ability of anti PID effect if the attenuation ratio of the photoelectric conversion of the solar cell 3 to be detected before and after the experiment is greater than a preset attenuation ratio; and determining that the solar cell 3 to be detected has the ability of anti PID effect if the attenuation ratio of the photoelectric conversion of the solar cell 3 to be detected before and after the experiment is not greater than the preset attenuation ratio. Specifically, in a preferable embodiment of the invention, the preset attenuation ratio is 5%. In other embodiments of the invention, the preset attenuation ratio may be adjusted according to specific conditions, which is not limited in the invention.

It can be seen from the above that in the technical solutions provided according to the embodiments of the invention, based on the fact that the attenuation ratio of the photoelectric conversion efficiency of the solar cell with the ability of anti PID effect is lower than the attenuation ratio of the photoelectric conversion efficiency of the solar cell without the ability of anti PID effect, it is judged whether the solar cell to be detected has the ability of anti PID effect by detecting the solar cell directly. So for determining whether the solar cell has the ability of anti PID effect, there is no need for a solar cell assembly manufactured by the solar cell. Therefore, there is no influence of the manufacturing process and the packaging material of the solar cell assembly on the testing result of the PID effect, which facilitates to analyze the responsibility of the solar cell and the solar cell assembly for the failure of the PID test of the solar cell assembly; and the accuracy of the detecting result of the PID effect of the solar cell is improved, the detecting process is simplified and quickened, the time and the cost are saved, and the process optimization of the solar cell is improved.

Various parts in the present specification are described in a progressive manner, with an emphasis placed on explaining the difference between the parts, therefore the content in one part is also suitable for the same or similar contents in other parts.

The description of the embodiments herein enables those skilled in the art to implement or use the present invention. Multiple modifications to the embodiments will be apparent to those skilled in the art, and the general principle herein may be implemented in other embodiments without departing from the spirit or scope of the present invention. Therefore, the present invention will not be limited to the embodiments described herein, but in accordance with the widest scope consistent with the principle and novel features disclosed herein.

## Claims

1. A device for detecting ability of anti potential induced degradation effect of a solar cell, comprising:
a static generator comprising a high voltage power supply and an ion stick connected to the high voltage power supply; and
a metal tray under the ion stick.

2. The device according to claim 1, wherein the static generator is adapted to generate a positive ion, a negative ion, or mixed ions of a positive ion and a negative ion.

3. The device according to claim 1, wherein the distance between the metal tray and the ion stick ranges from 5cm to 50cm, with 5cm and 50cm being comprised in.

4. The device according to claim 1, wherein the ion stick is adapted to generate ion radiation with a current strength ranging from 0.1mA to 10mA, with 0.1mA and 10mA being comprised in.

5. The device according to claim 1, wherein the ion stick is adapted to generate ion radiation during a time period ranging from 1 hour to 200 hours, with 1 hour and 200 hours being comprised in.

6. A method for detecting ability of anti potential induced degradation effect of a solar cell, which is applied to the device of any one of claims 1 to 5, comprising:
placing a static generator and a metal tray in a testing environment, wherein the static generator comprises a high voltage power supply and an ion stick connected to the high voltage power supply;
detecting photoelectric conversion efficiency of a solar cell to be detected;
placing the solar cell to be detected on the metal tray;
connecting the high voltage power supply and the solar cell to the ground respectively;
enabling the static generator to start an experiment and maintaining for a preset time period;
disabling the static generator and detecting photoelectric conversion efficiency of the solar cell to be detected; and
judging whether the solar cell to be detected has the ability of anti potential induced degradation effect according to the photoelectric conversion efficiencies of the solar cell to be detected before and after the experiment.

7. The method according to claim 6, wherein the enabling the static generator to start an experiment and maintaining for a preset time period comprises:
enabling the static generator, and supplying a high voltage of 30 kilovolt to the ion stick by the high voltage power supply;
generating an ion flow by the ion stick under the high voltage,
wherein the ion flow is conducted to the surface of the solar cell in a radiation manner,
and a discharge loop is formed among the ion stick, the solar cell and the ground, and
the whole procedure is maintained for the preset time period of 24 hours.

8. The method according to one of claims 6 or 7, wherein the judging whether the solar cell to be detected has the ability of anti potential induced degradation effect according to the photoelectric conversion efficiencies of the solar cell to be detected before and after the experiment comprises:
calculating an attenuation ratio of photoelectric conversion of the solar cell to be detected before and after the experiment according to the photoelectric conversion efficiencies of the solar cell to be detected before and after the experiment; and
judging whether the solar cell to be detected has the ability of anti potential induced degradation effect according to the attenuation ratio of photoelectric conversion of the solar cell to be detected before and after the experiment.

9. The method according to claim 8, wherein the judging whether the solar cell to be detected has the ability of anti potential induced degradation effect according to the attenuation ratio of photoelectric conversion of the solar cell to be detected before and after the experiment comprises:
determining that the solar cell to be detected does not have the ability of anti potential induced degradation effect if the attenuation ratio of photoelectric conversion of the solar cell to be detected before and after the experiment is greater than a preset attenuation ratio; and
determining that the solar cell to be detected has the ability of anti potential induced degradation effect if the attenuation ratio of photoelectric conversion of the solar cell to be detected before and after the experiment is not greater than the preset attenuation ratio.

10. The method according to one of claims 6 to 9, wherein the testing environment comprises:
an environmental temperature ranging from 0 degree Celsius to 100 degree Celsius, with 0 degree Celsius and 100 degree Celsius being comprised in; and
a relative humidity ranging from 0 to 100%.
